# EUROPÄISCHE PATENTANMELDUNG

(11) **EP 0 796 769 A1**
(43) Veröffentlichungstag der Anmeldung: **24.09.1997**
(21) Anmeldenummer: 97103698.3
(22) Anmeldetag: 06.03.1997
(51) Int. Cl.: B60R 21/20, B62D 25/14

(54) **Anordnung eines Beifahrer-Airbags**

(30) Priorität: 18.03.1996 DE 19610529
(71) Anmelder: ADAM OPEL AG, 65423 Rüsselsheim (DE)
(72) Erfinder: Rick, Ulrich, Dipl.-Ing., 55595 Roxheim (DE)
(74) Vertreter: Kümpfel, Heinz, Dipl.-Ing.

(57) **Zusammenfassung**

Die Erfindung betrifft die Anordnung eines Beifahrer-Airbags in einem Kraftfahrzeug mit einem der Fahrzeugstruktur zugeordneten Querträger (1), der sich unterhalb der Armaturentafel (2) erstreckt. Der Querträger (1) ist ein Gußteil und bildet ein Gehäuse (6) zur Aufnahme einer vormontierbaren Airbageinheit (7), bestehend zumindest aus einem Gasgenerator (11), einem Diffusor (12) und einem Gassack (13). Damit ist das Gehäuse (6) der Airbageinheit (7) stabil und schwingungssicher im Fahrzeug gehalten. Ein gesondertes Teil ist dafür nicht mehr erforderlich.

## Beschreibung

Die Erfindung betrifft die Anordnung eines Beifahrer-Airbags in einem Kraftfahrzeug gemäß dem Oberbegriff des ersten Patentanspruches.

Eine derartige Anordnung ist mit DE-OS 43 38 666 beschrieben. Bei dieser bekannten Anordnung ist das Gehäuse eines Airbagmoduls an seiner Bodenseite mit einem Träger versehen, der an eine nach oben weisende Fläche des Querträgers ragt. Eine Anlagefläche liegt am unteren Bereich des Querträgers an. Der Träger greift mit hakenartigen Zapfen in Öffnungen des Querträgers ein. Die Anlagefläche ist am Querträger durch eine Schraube gehalten.

Bei einer solchen Anordnung ist ein an den Querschnitt des Querträgers angepaßtes separates Gehäuse für die Airbageinheit erforderlich. Der Massenschwerpunkt des Airbagmoduls ist relativ weit von den Befestigungsstellen am Querträger entfernt. Dadurch können für die Airbageinheit schädliche Schwingungen im Fahrzeugbetrieb auftreten. Um diese Schwingungen zu reduzieren und um die bei Aktivierung des Airbags auftretenden Reaktionskräfte sicher aufnehmen zu können, müssen der Träger und die zusätzliche Halterung stabil und somit materialaufwendig ausgeführt sein. Auch der Montageaufwand dieser bekannten Anordnung ist relativ hoch.

Aufgabe der Erfindung ist es, die genannten Nachteile zu beseitigen.

Erfindungsgemäß wird diese Aufgabe durch die kennzeichnenden Merkmale des ersten Patentanspruches gelöst.

Durch die Integration des Gehäuses für die Airbageinheit in den Querträger bedarf es keines gesonderten Gehäuses mehr und somit auch keiner Gehäusebefestigung. Der Schwerpunkt der Airbageinheit kann durch die Integration des Gehäuses in den Querträger nahe oder direkt auf der neutralen Biegelinie des Querträgers plaziert sein, so daß Nickschwingungen des Airbagmoduls ausgeschlossen werden können. Die Montage des Beifahrer-Airbags wird vereinfacht, da die separat vormontierbare Airbageinheit lediglich in das bereits mit dem Querträger im Kraftfahrzeug vorhandene Gehäuse einzusetzen ist. Die Reaktionskräfte des sich entfaltenden Airbags können vom Querträger massiv und ohne Verformungen aufgenommen werden. Darüber hinaus werden in der räumlich engen Zone unterhalb des Armaturenbrettes Packagevorteile erzielt, da kein separates Gehäuse montiert werden muß. Die Bauteilreduzierung führt auch zu einer Montageerleichterung, einer Gewichtsverminderung und zu Kostenreduzierungen.

Der Querträger kann vorteilhaft als Gußteil gefertigt werden, wobei ein Leichmetallspritzgußteil sowohl in der Formgebung als auch bei den Festigkeitseigenschaften besonders vorteilhaft ist.

Ebenso kann der Querträger aber auch aus einem Kunststoff mit Faserverstärkung durch Spritzen hergestellt sein.

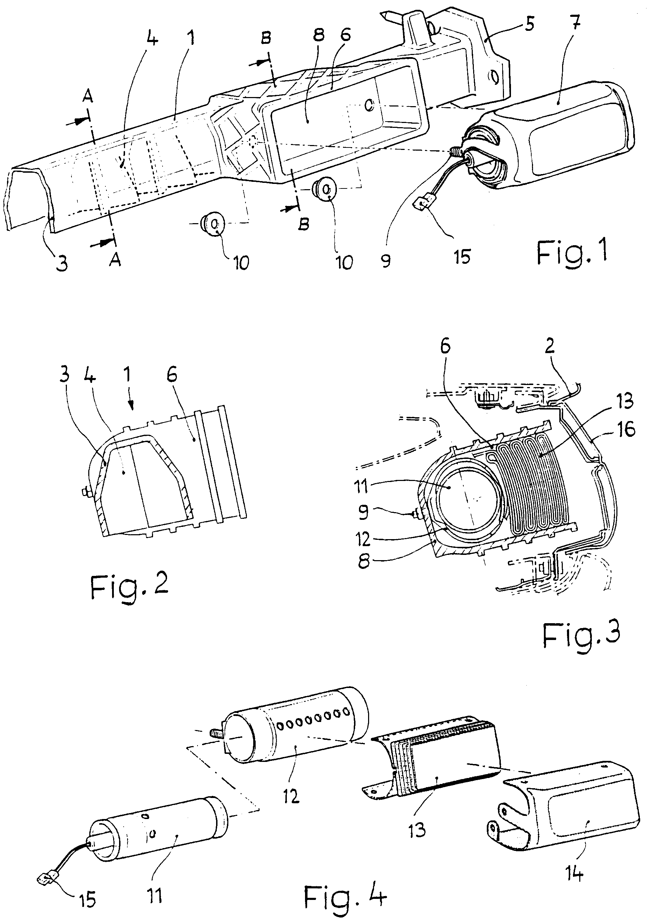

Ein Ausführungsbeispiel der Erfindung ist nachstehend anhand einer Zeichnung näher beschrieben. Es zeigen
- Fig. 1:: einen Querträger im Bereich des Beifahrer-Airbags in perspektivischer Ansicht;
- Fig. 2:: einen Schnitt entlang der Linie A-A in Figur 1;
- Fig. 3:: einen Schnitt entlang der Linie B-B in Figur 1 bei eingebauter Airbageinheit in einem Querträger hinter einer Armaturentafel;
- Fig. 4:: die Bestandteile einer Airbageinheit zur Anordnung an einem Querträger.

Ein Querträger 1, wie er zur Versteifung der Fahrzeugstruktur zwischen den beiden A-Säulen und unterhalb einer Armaturentafel 2 von Kraftfahrzeugen üblich ist, ist als Leichtmetallteil mit einem tragenden Profilquerschnitt 3, mit festigkeitssteigernder Verrippung 4, mit an beiden Enden befindlichen Befestigungsflanschen 5 und einem im Bereich des Beifahrers angeordneten, aus dem Profilquerschnitt 3 hervortretenden und in Richtung zum Fahrgastraum offenen Gehäuse 6 ausgebildet. Der Querträger 1 bildet in der tragenden Struktur des Kraftfahrzeuges ein zentrales Element. Das mit ihm eine Einheit bildende Gehäuse 6 ist somit fest in die tragende Struktur des Kraftfahrzeuges einbezogen. In dem Gehäuse 6 ist eine Airbageinheit 7 angeordnet und darin mittels den Boden 8 des Gehäuses 6 durchdringenden Bolzen 9 sowie auf diese Bolzen 9 aufschraubbare Muttern 10 befestigt. Die Airbageinheit 7 besteht aus einem Gasgenerator 11, einem Diffusor 12, einem Luftsack 13 und einer Luftsackumhüllung 14. Der Gasgenerator 11 ist in dem rohrförmigen Diffusor 12 eingeschoben. Am Diffusor 12 ist in an sich bekannter Weise der gefaltete Luftsack 13 befestigt. Die Luftsackumhüllung 14 hält den Luftsack 13 in seiner gefalteten Lage. Somit kann die Airbageinheit 7 außerhalb des Gehäuses 6 vormontiert und als Modul in das Gehäuse 6 eingesetzt und befestigt werden. Ein am Gasgenerator 11 befindlicher Steckkontakt 15 ermöglicht eine elektrische Verbindung zu einer Airbag-Auslöseelektronik. Die im Gehäuse 6 eingesetzte Airbageinheit 7 ist von einer mit der Armaturentafel 2 verbundenen Abdeckung 16 abgedeckt.

Im Crashfall wird von der Auslöseelektronik ein Signal generiert und in bekannter Weise über den Steckkontakt 15 ein Impuls zum Auslösen des Airbags gegeben. In der Folge wird vom Gasgenerator 12 eine Gasmenge freigesetzt, die über den Diffusor 12 gleichmäßig in den Luftsack 13 einströmt und diesen aufbläht. Dabei wird die Luftsackumhüllung 14 zerrissen und die Abdeckung 16 geöffnet. Der Luftsack 13 entfaltet sich in Richtung auf den Beifahrer in den Fahrzeuginnenraum. Die während dieses Vorganges erhebliche Reaktionskraft wird von dem stabilen Querträger 1 sicher aufgenommen. Auch die Entfaltungsrichtung des Luftsackes 13 bleibt während des Crashverlaufes stabil, da das Gehäuse 6 seine Lage zusammen mit dem Querträger 1 im Fahrzeug stabil beibehält. Die Airbageinheit 7 ist während der gesamten Fahrzeuglebensdauer im Gehäuse 6 geschützt und schwingungssicher untergebracht.

Die Erfindung ist nicht auf das beschriebene Ausführungsbeispiel beschränkt. So kann der Querträger auch anders als im vorliegenden Beispiel gestaltet sein und auch aus anderen gießfähigen Materialien gefertigt sein. Die Befestigung der Airbageinheit im Gehäuse kann z. B. auch durch Schnappelemente anstelle von Schrauben erfolgen. Die Verbindung zwischen dem Gehäuse und der Airbageinheit kann unter Zwischenschaltung elastischer Elemente erfolgen. Die angestrebten erfindungsgemäßen Vorteile bleiben auch bei solchen Ausführungen erhalten.

## Patentansprüche

1. Anordnung eines Beifahrer-Airbags in einem Kraftfahrzeug mit einem der Fahrzeugstruktur zugeordneten Querträger, der sich unterhalb der Armaturentafel erstreckt, **dadurch gekennzeichnet**, daß der Querträger (1) ein Gehäuse (6) für die Aufnahme einer Airbageinheit (7) bildet, wobei die Airbageinheit (7) zumindest einen Gasgenerator (11), einen Diffusor (12) und einen Gassack (13) aufweist.

2. Anordnung nach Anspruch 1, **dadurch gekennzeichnet**, daß die Airbageinheit (7) als vormontierbares Modul mit einer Luftsackumhüllung (14) gestaltet ist.

3. Anordnung nach Anspruch 1 und 2, **dadurch gekennzeichnet**, daß der Querträger (1) als Gußteil ausgebildet ist und im Bereich des Beifahrers ein in Richtung zum Fahrgastraum offenes Gehäuse (6) zur Aufnahme der Airbageinheit (7) aufweist.

4. Anordnung nach Anspruch 3, **dadurch gekennzeichnet**, daß der Querträger (1) ein Leichtmetallgußteil ist.

5. Anordnung nach Anspruch 3, **dadurch gekennzeichnet**, daß der Querträger (1) ein faserverstärktes Kunststofformteil ist.
